# EUROPEAN PATENT SPECIFICATION

(11) **EP 4 209 393 B1**
(45) Date of publication and mention of the grant of the patent: **30.04.2025**
(21) Application number: 22150847.6
(22) Date of filing: 11.01.2022
(51) Int. Cl.: B60R 19/34, F16F 7/12

(54) **A VEHCILE CRASH BOX AND A VEHICLE CRASH BOX STRUCTURE**
FAHRZEUG-CRASHBOX UND FAHRZEUG-CRASHBOX-STRUKTUR
BOÎTE-ABSORBEUR DE VÉHICULE ET STRUCTURE DE BOÎTE-ABSORBEUR DE VÉHICULE

(43) Date of publication of application: 12.07.2023
(73) Proprietor: AUTOTECH ENGINEERING S.L., 48340 Amorebieta-Etxano, Bizkaia (ES)
(72) Inventor: ÖRNBERG, Jacob, 97233 Luleå (SE)
(74) Representative: Ehrner & Delmar Patentbyrå AB

(56) References cited:
- EP-A1- 2 821 325
- EP-A2- 2 335 984
- WO-A1-2007/086787
- DE-A1- 10 014 469
- DE-A1- 102015 215 032
- US-B1- 6 174 009

## Description

### Technical Field

Aspects of the present invention relate to a vehicle crash box and a vehicle crash box structure, respectively, for attaching a bumper beam to a vehicle. Further, aspects of the present invention relate to a vehicle bumper structure comprising a bumper beam and one or more of such a vehicle crash box and vehicle crash box structure.

### Background of the Invention

In the design of a frame portion of a vehicle, there is a compromise between weight and strength. An advantageous manner of obtaining a good compromise is to produce a frame portion from one or more metal plates, or metal alloy plates, formed into a requested shape, e.g. a hat profile.

In general, a frame portion of a vehicle is formed to have a certain rigidity since it may receive various impacts from the outside. At the same time, some frame portions should allow deformation for absorbing impacts, or absorbing energy from impacts, when receiving an overload, e.g. due to a collision with an external object, e.g. another vehicle or a stationary object, e.g. a tree. One example of a vehicle frame portion that should be allowed to deform for absorbing impacts while being rigid is the bumper beam structure, or the vehicle crash box attaching the bumper beam to the vehicle. WO 2007/086787 A1 discloses a vehicle crash box corresponding to the preamble of claim 1.

### Summary of the Invention

The inventor of the present invention has found drawbacks in conventional solutions for vehicle crash boxes. For example, the inventor of the present invention has found that some conventional solutions for vehicle crash boxes do not provide a sufficient control of the deformation of the vehicle crash box while providing sufficient resistance to high loads during a collision.

An object of the invention is to provide a solution which mitigates or solves drawbacks and problems of conventional solutions.

The above and further objects are solved by the subject matter of the independent claims. Further advantageous embodiments of the invention can be found in the dependent claims.

According to a first aspect of the invention, the above mentioned and other objects are achieved with a vehicle crash box for attaching a bumper beam to a vehicle, wherein the vehicle crash box is attachable to the vehicle, wherein the vehicle crash box comprises
a tubular member having a longitudinal extension extending in a longitudinal direction, and
an interface for the attachment of the tubular member to the bumper beam,
wherein the tubular member comprises a plurality of longitudinal walls having a longitudinal extension extending in the longitudinal direction,
wherein the plurality of longitudinal walls comprises two lateral walls opposite one another,
wherein the lateral wall comprises two or more lateral sides spaced apart from one another in the longitudinal direction,
wherein the lateral side has a longitudinal extension extending in the longitudinal direction,
wherein the lateral side has a transverse extension extending in a direction transverse to the longitudinal direction,
wherein the two or more lateral sides of the lateral wall are aligned in the longitudinal direction,
wherein the transverse extensions of the two or more lateral sides of the lateral wall decrease in a direction away from the interface.

An advantage of the vehicle crash box according to the first aspect is that an improved control of the deformation of the vehicle crash box during a collision for absorbing impacts, or absorbing energy from impacts, is provided while at the same time a sufficient resistance to high loads during the collision is provided. An advantage of the vehicle crash box according to the first aspect is that an improved tailoring or design of the deformation behaviour of the vehicle crash box during a collision and/or of the deformation characteristics of the vehicle crash box is provided.

An advantage of the vehicle crash box according to the first aspect is that an improved control of the deformation of the vehicle crash box during a collision is provided while allowing (before any collision) a tubular member design having an essentially unchanged overall external width in the longitudinal direction or while allowing (before any collision) a tubular member design having the two lateral walls essentially in parallel to one another. An essentially unchanged overall external width of the tubular member in the longitudinal direction or having the two lateral walls essentially in parallel to one another (before any collision) may be advantageous for several configurations of a vehicle bumper structure including a bumper beam and one or more embodiments of the vehicle crash box according to the first aspect, for example for the design of the interface for the attachment of the tubular member to the bumper beam.

An advantage of the vehicle crash box according to the first aspect is that an improved control of the deformation of the vehicle crash box during a collision is provided while still allowing a broad range of configurations, i.e. many different kinds of designs, of the vehicle bumper structure including a bumper beam and one or more vehicle crash boxes according to the first aspect which still provide for sufficient resistance to high loads during a collision.

An advantage of the vehicle crash box according to the first aspect is that the performance of a vehicle bumper structure including one or more embodiments of the vehicle crash box according to the first aspect in collisions is improved, for example because the vehicle bumper structure and the vehicle crash box can be deformed in a more controlled and more predicted manner while still providing a vehicle bumper structure, which includes the vehicle crash box, which is sufficiently rigid and sufficiently resistance to high loads during a collision.

An advantage of the vehicle crash box according to the first aspect is that an improved vehicle crash box is provided. An advantage of the vehicle crash box according to the first aspect is that an improved vehicle bumper structure including one or more vehicle crash boxes is provided.

The vehicle crash box may be a vehicle crash box for a motor vehicle with a combustion engine, an electric vehicle having one or more electrical machines and one or more electric batteries, or a hybrid vehicle including both a combustion engine and one or more electrical machines. For example, the vehicle may be a car or a truck.

According to an advantageous embodiment of the vehicle crash box according to the first aspect, the tubular member forms a closed space, wherein the lateral side is located outside the closed space. An advantage of this embodiment is that the performance of a vehicle bumper structure including one or more vehicle crash boxes according to this embodiment in collisions is further improved. A "closed space" mentioned above also includes spaces which are substantially, or essentially, closed. For example, there may one or more minor through-holes in one or more longitudinal walls of the tubular member, and/or the ends of the tubular member may be at least partly open.

According to a further advantageous embodiment of the vehicle crash box according to the first aspect, the plurality of longitudinal walls comprises a top wall and a bottom wall, wherein the top wall and the bottom wall are opposite one another. An advantage of this embodiment is that the performance of a vehicle bumper structure including one or more vehicle crash boxes according to this embodiment in collisions is further improved.

According to another advantageous embodiment of the vehicle crash box according to the first aspect, the two lateral walls, the top wall and the bottom wall together form the tubular member. An advantage of this embodiment is that the performance of a vehicle bumper structure including one or more vehicle crash boxes according to this embodiment in collisions is further improved.

According to yet another advantageous embodiment of the vehicle crash box according to the first aspect, the top wall comprises two or more top sides spaced apart from one another in the longitudinal direction and aligned in the longitudinal direction, and
wherein the bottom wall comprises two or more bottom sides spaced apart from one another in the longitudinal direction and aligned in the longitudinal direction.

An advantage of this embodiment is that a further improved tailoring or design of the deformation behaviour of the vehicle crash box and/or of the deformation characteristics of the vehicle crash box is provided. An advantage of this embodiment is that the performance of a vehicle bumper structure including one or more vehicle crash boxes according to this embodiment in collisions is further improved.

According to still another advantageous embodiment of the vehicle crash box according to the first aspect, the tubular member forms a closed space,
wherein the top side is located outside the closed space, and
wherein the bottom side is located outside the closed space.

An advantage of this embodiment is that the performance of a vehicle bumper structure including one or more vehicle crash boxes according to this embodiment in collisions is further improved.

According to an advantageous embodiment of the vehicle crash box according to the first aspect, the transverse extension of one of the two or more lateral sides of the lateral wall located closer to the interface than another one of the two or more lateral sides of the lateral wall located farther away from the interface exceeds the transverse extension of the lateral side of the lateral wall located farther away from the interface. An advantage of this embodiment is that a further improved control of the deformation of the vehicle crash box during a collision for absorbing impacts is provided while at the same time a sufficient resistance to high loads during a collision is provided. An advantage of this embodiment is that the performance of a vehicle bumper structure including one or more vehicle crash boxes according to this embodiment in collisions is further improved.

According to a further advantageous embodiment of the vehicle crash box according to the first aspect, the interface comprises two recesses for holding the bumper beam,
wherein one of the two lateral walls forms one of the two recesses while the other one of the two lateral walls forms the other one of the two recesses.

An advantage of this embodiment is that the performance of a vehicle bumper structure including one or more vehicle crash boxes according to this embodiment in collisions is further improved. An advantage of this embodiment is that an improved interface for the attachment of the tubular member to the bumper beam is provided.

According to another advantageous embodiment of the vehicle crash box according to the first aspect, the lateral wall comprises three or more lateral sides spaced apart from one another in the longitudinal direction. An advantage of this embodiment is that a further improved tailoring or design of the deformation behaviour of the vehicle crash box and/or of the deformation characteristics of the vehicle crash box is provided. An advantage of this embodiment is that a further improved control of the deformation of the vehicle crash box during a collision for absorbing impacts is provided while at the same time a sufficient resistance to high loads during a collision is provided. An advantage of this embodiment is that the performance of a vehicle bumper structure including one or more vehicle crash boxes according to this embodiment in collisions is further improved.

According to yet another advantageous embodiment of the vehicle crash box according to the first aspect, the interface is configured for the attachment of the tubular member to a U-shaped member of the bumper beam, the U-shaped member having a U-shaped cross-section and being configured to open away from the tubular member in the longitudinal direction. An advantage of this embodiment is that the performance of a vehicle bumper structure including a bumper beam having a U-shaped member and one or more vehicle crash boxes according to this embodiment in collisions is further improved.

According to still another advantageous embodiment of the vehicle crash box according to the first aspect, the U-shaped member of the bumper beam has a convex side and a concave side, wherein the interface is configured for the attachment of the tubular member to the convex side of the U-shaped member. An advantage of this embodiment is that the performance of a vehicle bumper structure including a bumper beam having a U-shaped member and one or more vehicle crash boxes according to this embodiment in collisions is further improved.

According to an advantageous embodiment of the vehicle crash box according to the first aspect, wherein the longitudinal wall of the plurality of longitudinal walls is formed from a plate. This is an efficient way to produce the longitudinal wall.

According to a further advantageous embodiment of the vehicle crash box according to the first aspect, one or more of the tubular member and vehicle crash box comprises/comprise or consists/consist of a metal or a metal alloy. This is an efficient way to produce a strong tubular member or a strong vehicle crash box.

According to another advantageous embodiment of the vehicle crash box according to the first aspect, the transverse extension of the lateral side extends from a first concave corner of the lateral side to a second concave corner of the lateral side,
wherein the radii of the first concave corners of the two or more lateral sides of the lateral wall are different from one another.

An advantage of this embodiment is that a further improved tailoring or design of the deformation behaviour of the vehicle crash box and/or of the deformation characteristics of the vehicle crash box is provided. An advantage of this embodiment is that a further improved control of the deformation of the vehicle crash box during a collision for absorbing impacts is provided while at the same time a sufficient resistance to high loads during a collision is provided. An advantage of this embodiment is that the performance of a vehicle bumper structure including one or more vehicle crash boxes according to this embodiment in collisions is further improved. However, for alternative embodiments, the radii of the first concave corners of the two or more lateral sides of the lateral wall may be equal, or substantially equal.

According to yet another advantageous embodiment of the vehicle crash box according to the first aspect, the radii of the second concave corners of the two or more lateral sides of the lateral wall are different from one another. An advantage of this embodiment is that a further improved tailoring or design of the deformation behaviour of the vehicle crash box and/or of the deformation characteristics of the vehicle crash box is provided. An advantage of this embodiment is that a further improved control of the deformation of the vehicle crash box during a collision for absorbing impacts is provided while at the same time a sufficient resistance to high loads during a collision is provided. An advantage of this embodiment is that the performance of a vehicle bumper structure including one or more vehicle crash boxes according to this embodiment in collisions is further improved. However, for alternative embodiments, the radii of the second concave corners of the two or more lateral sides of the lateral wall may be equal, or substantially equal.

According to still another advantageous embodiment of the vehicle crash box according to the first aspect, the radii of the first concave corners of the two or more lateral sides of the lateral wall decrease in a direction toward the interface. An advantage of this embodiment is that a further improved control of the deformation of the vehicle crash box during a collision for absorbing impacts is provided while at the same time a sufficient resistance to high loads during a collision is provided. An advantage of this embodiment is that the performance of a vehicle bumper structure including one or more vehicle crash boxes according to this embodiment in collisions is further improved. However, for alternative embodiments, the radii of the first concave corners of the two or more lateral sides of the lateral wall may increase in a direction toward the interface.

According to an advantageous embodiment of the vehicle crash box according to the first aspect, the radii of the second concave corners of the two or more lateral sides of the lateral wall decrease in a direction toward the interface. An advantage of this embodiment is that a further improved control of the deformation of the vehicle crash box during a collision for absorbing impacts is provided while at the same time a sufficient resistance to high loads during a collision is provided. An advantage of this embodiment is that the performance of a vehicle bumper structure including one or more vehicle crash boxes according to this embodiment in collisions is further improved. However, for alternative embodiments, the radii of the second concave corners of the two or more lateral sides of the lateral wall may increase in a direction toward the interface.

According to a further advantageous embodiment of the vehicle crash box according to the first aspect, the radius of the first concave corner of one of the two or more lateral sides of the lateral wall located farther away from the interface than another one of the two or more lateral sides of the lateral wall located closer to the interface exceeds the radius of the first concave corner of the lateral side of the lateral wall located closer to the interface. An advantage of this embodiment is that a further improved control of the deformation of the vehicle crash box during a collision for absorbing impacts is provided while at the same time a sufficient resistance to high loads during a collision is provided. An advantage of this embodiment is that the performance of a vehicle bumper structure including one or more vehicle crash boxes according to this embodiment in collisions is further improved.

According to another advantageous embodiment of the vehicle crash box according to the first aspect, the radius of the second concave corner of one of the two or more lateral sides of the lateral wall located farther away from the interface than another one of the two or more lateral sides of the lateral wall located closer to the interface exceeds the radius of the second concave corner of the lateral side of the lateral wall located closer to the interface. An advantage of this embodiment is that a further improved control of the deformation of the vehicle crash box during a collision for absorbing impacts is provided while at the same time a sufficient resistance to high loads during a collision is provided. An advantage of this embodiment is that the performance of a vehicle bumper structure including one or more vehicle crash boxes according to this embodiment in collisions is further improved.

According to yet another advantageous embodiment of the vehicle crash box according to the first aspect, the tubular member forms a closed space, and
wherein one or more of the first and second concave corners opens/open away from the closed space.

An advantage of this embodiment is that the performance of a vehicle bumper structure including one or more vehicle crash boxes according to this embodiment in collisions is further improved.

The vehicle crash box structure may be a vehicle crash box structure for a motor vehicle with a combustion engine, an electric vehicle having one or more electrical machines and one or more electric batteries, or a hybrid vehicle including both a combustion engine and one or more electrical machines. For example, the vehicle may be a car or a truck.

According to a second aspect of the invention, the above mentioned and other objects are achieved with a vehicle bumper structure comprising a bumper beam and one or more vehicle crash boxes according to any one of the embodiments disclosed above.

Advantages of the vehicle bumper structure according to the second aspect correspond to advantages of the vehicle crash box according to the first aspect and its embodiments mentioned above or below and are thus not repeated here.

Advantages of the below-mentioned embodiments of the vehicle bumper structure according to the second aspect correspond to advantages of the embodiments of the vehicle crash box according to the first aspect mentioned above and are thus not repeated hereinbelow.

According to an advantageous embodiment of the vehicle bumper structure according to the second aspect, the bumper beam comprises a U-shaped member having a U-shaped cross-section, wherein the U-shaped member is configured to open away from the tubular member in the longitudinal direction.

The above-mentioned features and embodiments of the vehicle crash box, the vehicle crash box structure and the vehicle bumper structure may be combined in various possible ways providing further advantageous embodiments.

Further advantageous embodiments of the vehicle crash box, the vehicle crash box structure and the vehicle bumper structure according to the present invention and further advantages with the embodiments of the present invention emerge from the detailed description of embodiments.

### Brief Description of the Drawings

Embodiments of the invention will now be illustrated, for exemplary purposes, in more detail by way of embodiments and with reference to the enclosed drawings, where similar references are used for similar parts, in which:
- Figure 1: is a schematic front perspective view of two embodiments of the vehicle crash box according to the first aspect of the invention and of an embodiment of the vehicle bumper structure according to the second aspect of the invention;
- Figure 2: is a schematic rear perspective view of the two embodiments of the vehicle crash box and of the embodiment of the vehicle bumper structure of figure 1;
- Figure 3: is a schematic front view of the embodiment of the vehicle bumper structure of figure 1;
- Figure 4: is a schematic top view of the two embodiments of the vehicle crash box and of the embodiment of the vehicle bumper structure of figure 1;
- Figure 5: is a schematic side view of one of the two embodiments of the vehicle crash box of figure 1 and a schematical sectional side view of the embodiment of the vehicle bumper structure of figure 1;
- Figure 6: is a schematic rear view of one of the two embodiments of the vehicle crash box of figures 1 to 5;
- Figure 7: is a schematic perspective view of a section of the embodiment of the vehicle crash box of figure 6;
- Figure 8: is a schematic side view of the embodiment of the vehicle crash box of figure 6;
- Figure 9: is a schematic top view of the embodiment of the vehicle crash box of figure 6;
- Figure 10: is a schematic perspective view of an embodiment of the vehicle crash box structure according to aspects of the invention; and
- Figure 11: is a schematic rear perspective view of a portion of the embodiment of the vehicle crash box structure of figure 10;

### Detailed Description

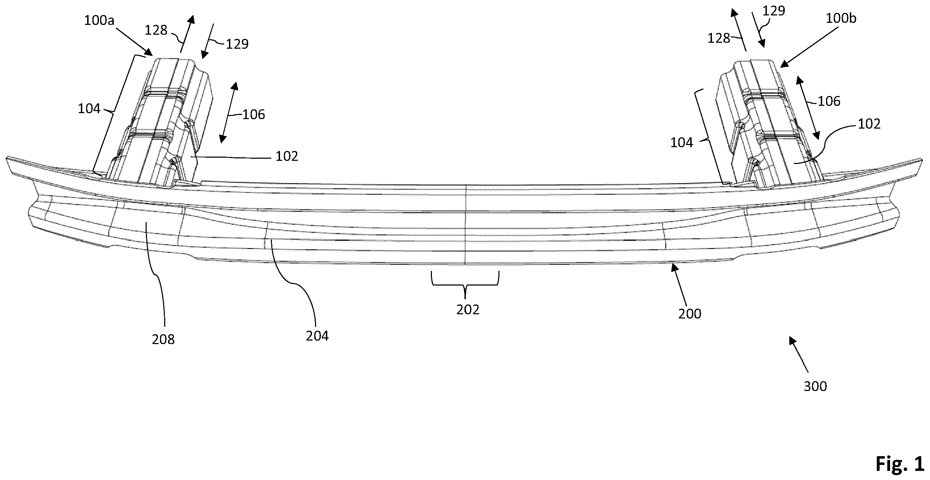

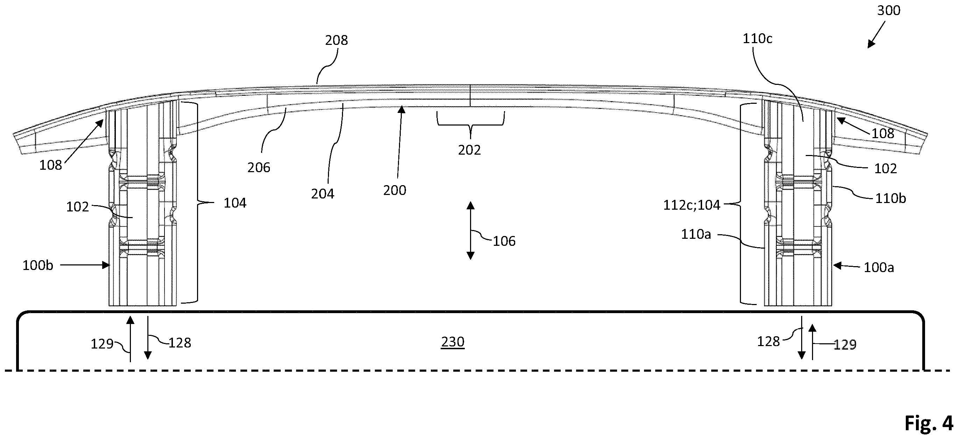

With reference to figures 1 and 4, two embodiments of the vehicle crash box 100a, 100b for attaching, or for the attachment of, a bumper beam 200 to a vehicle 230 (see figure 4) according to the first aspect of the invention are schematically illustrated. Further, an embodiment of the vehicle bumper structure 300 according to the second aspect of the invention is schematically illustrated. The bumper beam 200 may be provided at the front of the vehicle 230 or at the rear of the vehicle 230. For some embodiments, the bumper beam 200 may be referred to as a cross beam.

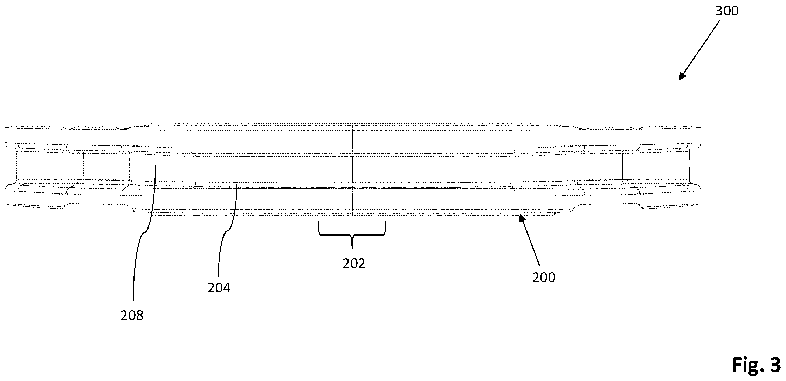

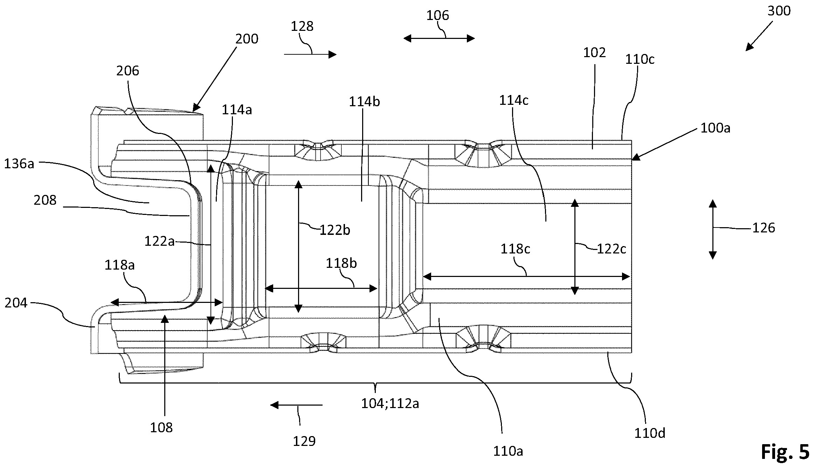

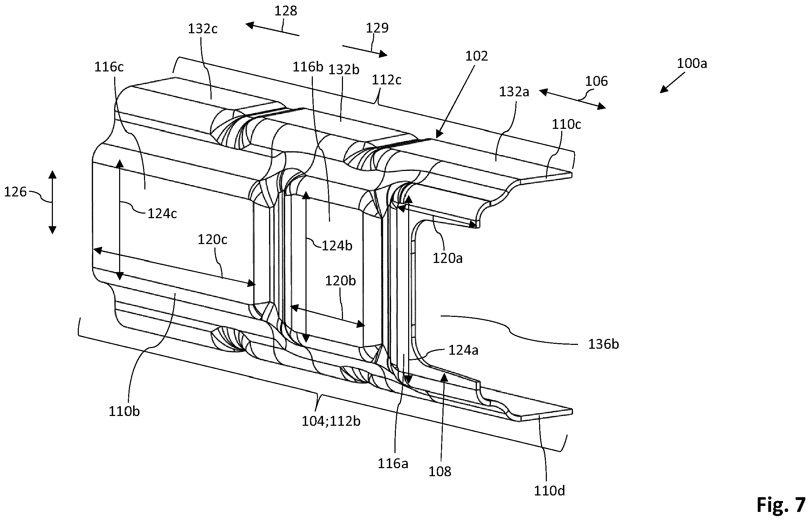

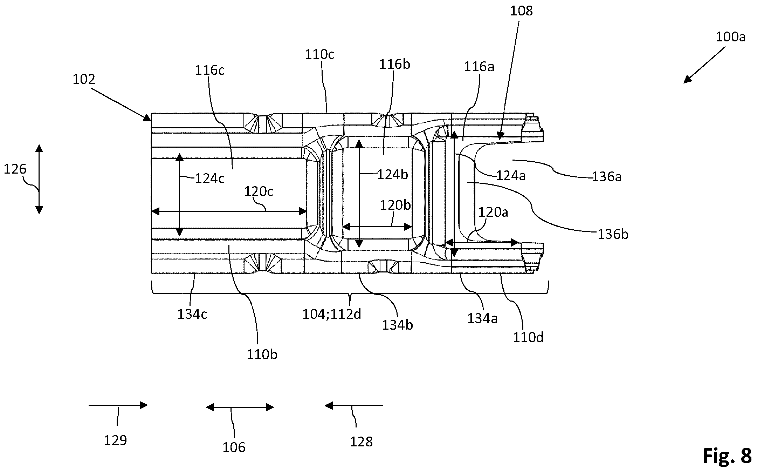

In figures 5 to 9, one 100a of the two vehicle crash boxes 100a, 100b in figures 1 to 4 is schematically illustrated in further detail.

With reference to figures 1 to 9, the vehicle crash box 100a is attachable to a vehicle 230, for example a motor vehicle with a combustion engine, an electric vehicle having one or more electrical machines and one or more electric batteries, or a hybrid vehicle including both a combustion engine and one or more electrical machines. For example, the vehicle 230 may be a car or a truck. However, other types of vehicles are possible

With reference to figures 1 to 9, the vehicle crash box 100a includes a tubular member 102. The tubular member 102 has a longitudinal extension 104 extending in a longitudinal direction 106. Further, the vehicle crash box 100a includes an interface 108 for the attachment of the tubular member 102 to the bumper beam 200. The attachment of the tubular member 102 to the bumper beam 200 may be provided by way of one or more welds, or by welding, or by way of any other means of attachment, for example an adhesive. For some embodiments, the tubular member 102 may be described to comprise the interface 108. For some embodiments, the bumper beam 200 and/or the interface 108 may include a patch to which the tubular member 102 and/or the crash box is 100a attachable.

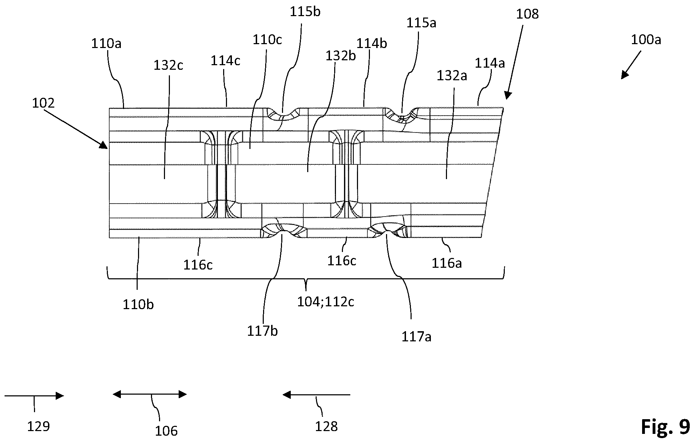

With reference to figures 1 to 9, the tubular member 102 includes a plurality of longitudinal walls 110a-d. Each longitudinal wall 110a-d of the plurality of longitudinal walls 110a-d has a longitudinal extension 112a-d extending in the longitudinal direction 106. The plurality of longitudinal walls 110a-d includes two lateral walls 110a-b opposite one another. The lateral wall 110a-b includes two or more lateral sides 114a-c, 116a-c spaced apart, or separated, from one another in the longitudinal direction 106, for example three or more lateral sides 114a-c, 116a-c spaced apart from one another in the longitudinal direction 106. With reference to figure 9, for example, the two or more lateral sides 114a-c, 116a-c may be spaced apart from one another by way of one or more recesses 115a-b; 117a-b. For some embodiments, when the vehicle crash box 100a is mounted to a vehicle 230, the lateral side 114a-c, 116a-c may be referred to as a substantially vertical side. The lateral side 114a-c, 116a-c has a longitudinal extension 118a-c, 120a-c extending in the longitudinal direction 106. The lateral side 114a-c, 116a-c has a transverse extension 122a-c, 124a-c extending in a direction 126 transverse to the longitudinal direction 106. The two or more lateral sides 114a-c, 116a-c of the lateral wall 110a-b, i.e. the two or more lateral sides 114a-c, 116a-c of the same lateral wall 110a-b, are aligned in the longitudinal direction 106.

With reference to figures 1 to 9, for some embodiments, the tubular member 102 may be described as an overall "straight", or a substantially "straight", tubular member, since the longitudinal walls 110a-d have a longitudinal extension 112a-d extending in the longitudinal direction 106, and since the lateral sides 114a-c, 116a-c of the same lateral wall 110a-b are aligned in the longitudinal direction 106. Thus, the shape of the tubular member 102 may be described as a non-pyramidical shape and/or a non-conical shape. The tubular member 102 may be described to be not shaped as a truncated cone and/or not shaped as a frustum.

With reference to figures 5, 7 and 8, the transverse extensions 122a-c, 124a-c of the two or more lateral sides of the lateral wall 110a-b, i.e. the transverse extensions 122a-c, 124a-c of the two or more lateral sides 114a-c, 116a-c of the same lateral wall 110a-b, decrease, or are reduced, in a direction 128 away from the interface 108. For some embodiments, it may be described that the lengths of the transverse extensions 122a-c, 124a-c of the two or more lateral sides 114a-c, 116a-c of the same lateral wall decrease, or are reduced, in the direction 128 away from the interface 108. It is to be understood that the above-mentioned decrease of the transverse extensions 122a-c, 124a-c is an intended decrease and not a decrease, or a variation, simply because of manufacturing tolerances related to, or resulting from, the manufacturing of the tubular member 102 and/or of the vehicle crash box 100a.

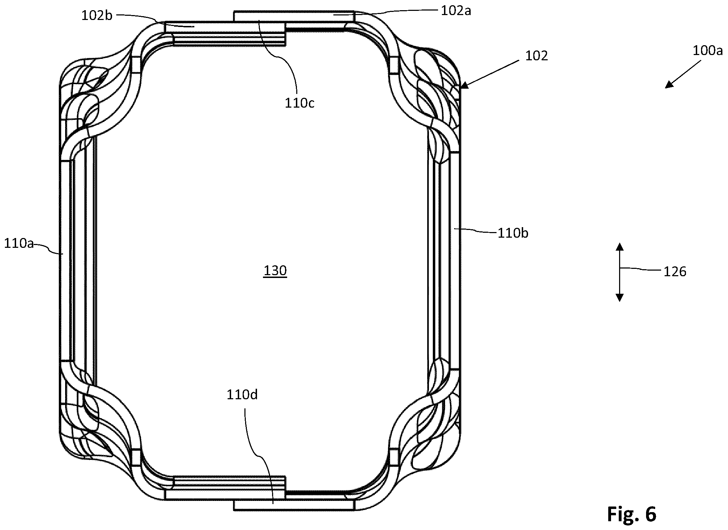

With reference to figure 6, for some embodiments, it may be defined that the tubular member 102 forms, or defines, a closed space 130. For some embodiments, it may be defined that the plurality of longitudinal walls 110a-d forms, or defines, the closed space 130. For some embodiments, the closed space 130 may be described as a room or a compartment. A "closed space" 130 mentioned above also includes spaces which are substantially, or essentially, closed. For example, there may one or more minor through-holes in one or more longitudinal walls 110a-d of the tubular member 102, and/or the ends of the tubular member 102 may be at least partially open. For some embodiments, it may be defined that the lateral side 114a-c, 116a-c is located outside the closed space 130.

With reference to figures 1 to 9, for some embodiments, the longitudinal wall 110a-d of the plurality of longitudinal walls 110a-d may be formed from a plate. However, the tubular member 102 may be produced in other ways. One or more of the tubular member 102 and vehicle crash box 100a may include or may consist of a metal or a metal alloy. However, other materials are also possible.

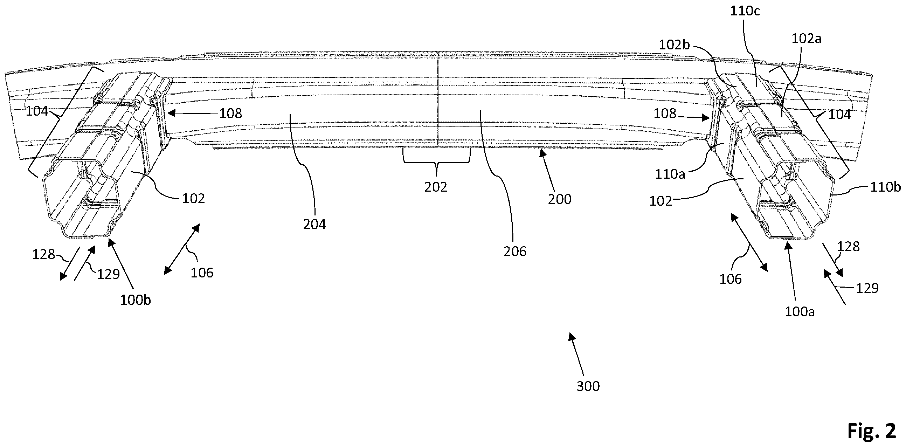

With reference to figures 2 and 6, for some embodiments, the tubular member 102 may include two or more sections 102a, 102b, for example two or more longitudinal sections 102a, 102b. The two or more sections 102a, 102b may be lateral sections 102a, 102b. Each section 102a, 102b of the tubular member 102 may include one or more longitudinal walls 110a-d of the plurality of longitudinal walls 110a-d and/or include one or more portions of the one or more longitudinal walls 110a-d of the plurality of longitudinal walls 110a-d. In the illustrated embodiment, one 102a of the sections 102a, 102b of the tubular member 102 may be described as an outer section 102a, or a laterally outer section 102a. The other one 102b of the sections 102a, 102b of the tubular member 102 may be referred to as an inner section 102b, or a laterally inner section 102b. When the tubular member 102 is attached to the bumper beam 200, it may be described that the laterally inner section 102b of the tubular member 102 of the vehicle crash box 100a is positioned closer to a middle section 202 of the bumper beam 200 in relation to the other section 102b. The two or more sections 102a, 102b may be joined, or attached, to one another, for example by way of welding, or by any other means of attachment, for example an adhesive. In the illustrated embodiment, the outer section 102a includes one 110b of the two lateral walls 110a-b while the inner section 102b includes the other one 110a of the two lateral walls 110a-b. Further, in the illustrated embodiment, each one of the outer and inner sections 102a-b includes portions of two other longitudinal walls 110c-d of the plurality of longitudinal walls 110a-d. In the illustrated embodiment, each section 102a, 102b of the tubular member 102 is substantially U-shaped.

With reference to figures 1 to 9, for some embodiments, it may be defined that the plurality of longitudinal walls 110a-d includes a top wall 110c and a bottom wall 110d. The top wall 110c and the bottom wall 110d are opposite one another. For some embodiments, it may be defined that the two lateral walls 110a-b, the top wall 110c and the bottom wall 110d of the same vehicle crash box 100a together form the tubular member 102 of the vehicle crash box 100a.

With reference to figures 1 to 9, for some embodiments, the top wall 110c may include two or more, for example three or more, top sides 132a-c spaced apart, or separated, from one another in the longitudinal direction 106 and aligned in the longitudinal direction 106, and wherein the bottom wall 110d may include two or more, for example three or more, bottom sides 134a-c spaced apart from one another in the longitudinal direction 106 and aligned in the longitudinal direction 106. For some embodiments, it may be defined that the top side 132a-c is located outside the closed space 130 and that the bottom side 134a-c is located outside the closed space 130. For example, the two or more top sides 132a-c may be spaced apart from one another by way of one or more recesses. For example, the two or more bottom sides 134a-c may be spaced apart from one another by way of one or more recesses.

With reference to figures 5, 7 and 8, for some embodiments, it may be defined that the transverse extension 122a-b; 124a-b of one 114a-b; 116a-b of the two or more lateral sides 114a-c; 116a-c of the lateral wall 110a; 110b located closer to the interface 108 (i.e. the one lateral side 114a-b; 116a-b closer to the interface 108) than another one 114b-c; 116b-c of the two or more lateral sides 114a-c; 116a-c of the lateral wall 110a; 110b located farther away from the interface 108 (i.e. the other one lateral side 114b-c; 116b-c farther away from the interface 108) exceeds the transverse extension 122b-c; 124b-c of the lateral side 114b-c; 116b-c of the lateral wall 110a; 110b located farther away from the interface 108 (i.e. the transverse extension 122b-c; 124b-c of the other one lateral side 114b-c; 116b-c farther away from the interface 108). It is to be understood that the above-mentioned difference between the transverse extension 122a-b; 124a-b of one 114a-b; 116a-b of the two or more lateral sides 114a-c; 116a-c of the lateral wall 110a; 110b located closer to the interface 108 than another one 114b-c; 116b-c of the two or more lateral sides 114a-c; 116a-c of the lateral wall 110a; 110b located farther away from the interface 108 and the transverse extension 122b-c; 124b-c of the lateral side 114b-c; 116b-c of the lateral wall 110a; 110b located farther away from the interface 108 is an intended difference and not a difference, or a variation, simply because of manufacturing tolerances related to, or resulting from, the manufacturing of the tubular member 102 and/or of the vehicle crash box 100a. For example, for some embodiments, the transverse extension 122a-b; 124a-b of one 114a-b; 116a-b of the two or more lateral sides 114a-c; 116a-c of the lateral wall 110a; 110b located closer to the interface 108 than another one 114b-c; 116b-c of the two or more lateral sides 114a-c; 116a-c of the lateral wall 110a; 110b located farther away from the interface 108 may exceed the transverse extension 122b-c; 124b-c of the lateral side 114b-c; 116b-c of the lateral wall 110a; 110b located farther away from the interface 108 by at least 1 to 5 percent, for example by at least 5 to 10 percent, such as by at least 10 percent.

With reference to figures 5, 7 and 8, for some embodiments and as illustrated in the shown embodiment, the transverse extension 122a; 124a of the one 114a; 116a of the two or more lateral sides 114a-c; 116a-c of the lateral wall 110a; 110b closest to the interface 108 in relation to the another ones 114b-c; 116b-c of the two or more lateral sides 114a-c; 116a-c of the lateral wall 110a; 110b may exceed the transverse extension 122b; 124b of a next following lateral side 114b; 116b of the lateral wall 110a; 110b in the direction 128 away from the interface 108, for example by at least 1 to 5 percent, for example by at least 5 to 10 percent, such as by at least 10 percent. For some embodiments and as illustrated in the shown embodiment, the transverse extension 122b; 124b of said next following lateral sides 114b; 116b of the lateral wall 110a; 110b may exceed the transverse extension 122c; 124c of a next lateral side 114c; 116c of the lateral wall 110a; 110b following said next following lateral side 114b; 116b of the lateral wall 110a; 110b in the direction 128 away from the interface 108, for example by at least 1 to 5 percent, for example by at least 5 to 10 percent, such as by at least 10 percent.

With reference to figures 5, 7 and 8, for some embodiments, the interface 108 may comprise, or may form, two recesses 136a-b for holding the bumper beam 200. One 110a of the two lateral walls 110a-b may form one 136a of the two recesses 136a-b while the other one 110b of the two lateral walls 110a-b may form the other one 126b of the two recesses 136a-b. For some embodiments, the interface 108 may be configured for the attachment of the tubular member 102 to a U-shaped member 204 of the bumper beam 200, wherein the U-shaped member 204 has a U-shaped cross-section and is configured to open away from the tubular member 102 in the longitudinal direction 106. For some embodiments, the U-shaped member 204 of the bumper beam 200 may have a convex side 206 and a concave side 208. The interface 108 may be configured for the attachment of the tubular member 102 to the convex side 206 of the U-shaped member 204. For some embodiments, the U-shaped member 204 may be referred to as a U-shaped cross member.

With reference to figures 1 to 5, and as mentioned above, an embodiment of the vehicle bumper structure 300 according to the second aspect of the invention is schematically illustrated. The vehicle bumper structure 300 includes a bumper beam 200 according any one of the embodiments disclose above or below. The vehicle bumper structure 300 includes one or more vehicle crash boxes 100a, 100b, for example two vehicle crash boxes 100a, 100b, according to any one of the embodiments disclose above or below. For some embodiments of the vehicle bumper structure 300, the one or more vehicle crash boxes 100a, 100b may be defined to be attached to the bumper beam 200, for example via the above-mentioned interface 108 or interfaces 108. For some embodiments of the vehicle bumper structure 300 and as mentioned above, the bumper beam 200 may include a U-shaped member 204 having a U-shaped cross-section and being configured to open away from the tubular member 102 in the longitudinal direction 106.

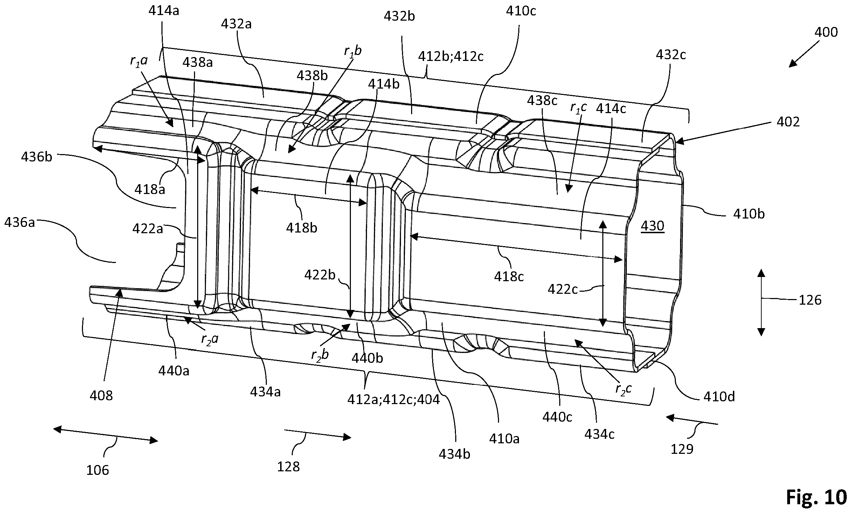

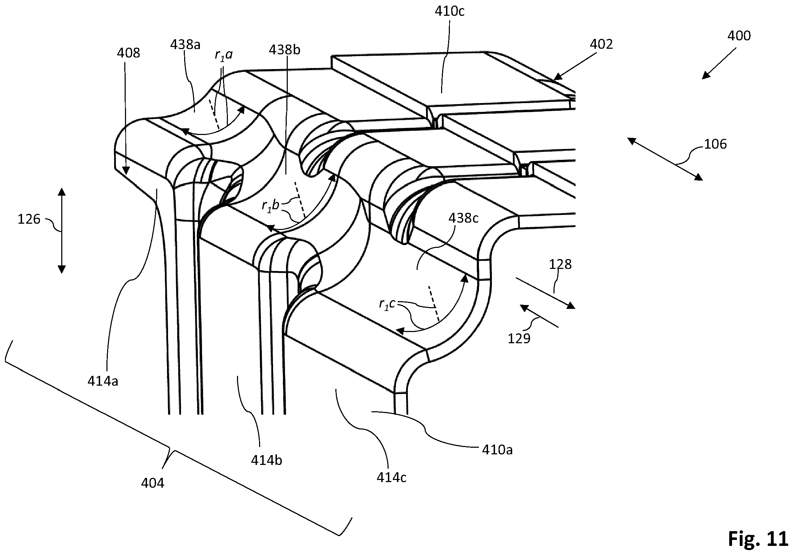

With reference to figures 10 and 11, an embodiment of a vehicle crash box structure 400 for attaching, or for the attachment of, a bumper beam 200 to a vehicle 230 according to aspects of the invention is schematically illustrated. Several features of the the vehicle crash box structure 400 of figures 10 and 11 may correspond to features of the vehicle crash box 100a, 110b of figures 1 to 9 and are thus not described in further detail here to avoid repetition. The vehicle crash box structure 400 of figures 10 and 11 is attachable to a vehicle 230. The vehicle crash box structure 400 includes a tubular member 402 having a longitudinal extension 404 extending in a longitudinal direction 106. The vehicle crash box structure 400 includes an interface 408 for the attachment of the tubular member 402 to the bumper beam 200. The tubular member 402 includes a plurality of longitudinal walls 410a-d having a longitudinal extension 412a-d extending in the longitudinal direction 106. The plurality of longitudinal walls 410a-d includes two lateral walls 410a-b opposite one another. The lateral wall 410a-b includes two or more, for example three or more, lateral sides 414a-c spaced apart from one another in the longitudinal direction 106, for example spaced apart by way of one or more recesses. The lateral side 414a-c has a longitudinal extension 418a-c extending in the longitudinal direction 106. The lateral side 414a-c has a transverse extension 422a-c extending in a direction 126 transverse to the longitudinal direction 106. The transverse extension 422a-c of the lateral side 414a-c extends from a first concave corner 438a-c of the lateral side 414a-c to a second concave corner 440a-c of the lateral side 414a-c. The radii *r₁a-c* of the first concave corners 438a-c of the two or more lateral sides 414a-c of the lateral wall 410a, i.e. of the same lateral wall 410a, are different from one another.

With reference to figures 10 and 11, for some embodiments, the radii *r₂a-c* of the second concave corners 440a-c of the two or more lateral sides 414a-c of the lateral wall 410a, i.e. of the same lateral wall 410a, are different from one another. For some embodiments, each one 438a-c, 440a-c of the first and second concave corners 438a-c, 440a-c may be described to have a longitudinal extension extending in the longitudinal direction 106, or substantially extending in the longitudinal direction 106.

With reference to figures 10 and 11, for some embodiments, the radii *r₁a-c* of the first concave corners 438a-c of the two or more lateral sides 414a-c of the lateral wall 410a, i.e. of the same lateral wall 410a, decrease, or are reduced, in a direction 129 toward the interface 408. For some embodiments, the radii *r₂a-c* of the second concave corners 440a-c of the two or more lateral sides 414a-c of the lateral wall 410a, i.e. of the same lateral wall 410a, decrease, or are reduced, in a direction 129 toward the interface 408. For some embodiments, it may be defined that the radii *r₁a-c* of the first concave corners 438a-c of the two or more lateral sides 414a-c of the lateral wall 410a, i.e. of the same lateral wall 410a, increase in a direction 128 away from the interface 408. For some embodiments, it may be defined that the radii *r₂a-c* of the second concave corners 440a-c of the two or more lateral sides 414a-c of the lateral wall 410a, i.e. of the same lateral wall 410a, increase in a direction 128 away from the interface 408.

With reference to figures 10 and 11, for some embodiments, the radius *r₁b-c* of the first concave corner 438b-c of one 414b-c of the two or more lateral sides 414a-c of the lateral wall 410a located farther away from the interface 408 (i.e. the one lateral side 414b-c located farther away from the interface 408) than another one 414a-b of the two or more lateral sides 414a-c of the lateral wall 410a located closer to the interface 408 (i.e. the other one lateral side 414a-b located closer to the interface 408) may exceed the radius *r₁a-b* of the first concave corner 438a-b of the lateral side 414a-b of the lateral wall 410a located closer to the interface 408 (i.e. the one lateral side 414a-b located closer to the interface 408). It is to be understood that the above-mentioned difference between the radius *r₁b-c* of the first concave corner 438b-c of one 414b-c of the two or more lateral sides 414a-c of the lateral wall 410a located farther away from the interface 408 than another one 414a-b of the two or more lateral sides 414a-c of the lateral wall 410a located closer to the interface 408 and the radius *r₁a-b* of the first concave corner 438a-b of the lateral side 414a-b of the lateral wall 410a located closer to the interface 408 is an intended difference and not a difference, or a variation, simply because of manufacturing tolerances related to, or resulting from, the manufacturing of the tubular member 402 and/or of the vehicle crash box structure 400. For example, for some embodiments, the radius *r₁b-c* of the first concave corner 438b-c of one 414b-c of the two or more lateral sides 414a-c of the lateral wall 410a located farther away from the interface 408 than another one 414a-b of the two or more lateral sides 414a-c of the lateral wall 410a located closer to the interface 408 may exceed the radius *r₁a-b* of the first concave corner 438a-b of the lateral side 414a-b of the lateral wall 410a located closer to the interface 408 by at least 1 to 5 percent, for example by at least 5 to 10 percent, such as by at least 10 percent.

With reference to figures 10 and 11, for some embodiments and as illustrated in the shown embodiment, the radius *r₁c* of the first concave corner 438c of the one 414c of the two or more lateral sides 414a-c of the lateral wall 410a farthest away from the interface 408 in relation to the other ones 414a-b of the two or more lateral sides 414a-c of the lateral wall 410a may exceed the radius *r₁b* of the first concave corner 438b of a next following lateral side 414b of the lateral wall 410a in the direction 129 toward the interface 408, for example by at least 1 to 5 percent, for example by at least 5 to 10 percent, such as by at least 10 percent. For some embodiments and as illustrated in the shown embodiment, the radius *r₁b* of the first concave corner 438b of said next following lateral sides 414b of the lateral wall 410a may exceed the radius *r₁a* of the first concave corner 438a of a next lateral side 414a of the lateral wall 410a following said next following lateral side 414b of the lateral wall 410a in the direction 129 toward the interface 408, for example by at least 1 to 5 percent, for example by at least 5 to 10 percent, such as by at least 10 percent.

With reference to figures 10 and 11, for some embodiments, the radius *r₂b-c* of the second concave corner 440b-c of one 414b-c of the two or more lateral sides 414a-c of the lateral wall 410a located farther away from the interface 408 (i.e. the one lateral side 414b-c located farther away from the interface 408) than another one 414a-b of the two or more lateral sides 414a-c of the lateral wall 410a located closer to the interface (i.e. the other one lateral side 414a-b located closer to the interface 408) may exceed the radius *r₂a-b* of the second concave corner 440a-b of the lateral side 414a-b of the lateral wall 410a located closer to the interface 408 (i.e. the other one lateral side 414a-b located closer to the interface 408). It is to be understood that the above-mentioned difference between the radius *r₂b-c* of the second concave corner 440b-c of one 414b-c of the two or more lateral sides 414a-c of the lateral wall 410a located farther away from the interface 408 than another one 414a-b of the two or more lateral sides 414a-c of the lateral wall 410a located closer to the interface and the radius *r₂a-b* of the second concave corner 440a-b of the lateral side 414a-b of the lateral wall 410a located closer to the interface 408 is an intended difference and not a difference, or a variation, simply because of manufacturing tolerances related to, or resulting from, the manufacturing of the tubular member 402 and/or of the vehicle crash box structure 400. For example, for some embodiments, the radius *r₂b-c* of the second concave corner 440b-c of one 414b-c of the two or more lateral sides 414a-c of the lateral wall 410a located farther away from the interface 408 than another one 414a-b of the two or more lateral sides 414a-c of the lateral wall 410a located closer to the interface may exceed the radius *r₂a-b* of the second concave corner 440a-b of the lateral side 414a-b of the lateral wall 410a located closer to the interface 408 by at least 1 to 5 percent, for example by at least 5 to 10 percent, such as by at least 10 percent.

With reference to figures 10 and 11, for some embodiments and as illustrated in the shown embodiment, the radius *r₂c* of the second concave corner 440c of the one 414c of the two or more lateral sides 414c of the lateral wall 410a farthest away from the interface 408 in relation to the other ones 414a-b of the two or more lateral sides 414a-c of the lateral wall 410a may exceed the radius *r₂b* of the second concave corner 440b of a next following lateral side 414b of the lateral wall 410a in the direction 129 toward the interface 408, for example by at least 1 to 5 percent, for example by at least 5 to 10 percent, such as by at least 10 percent. For some embodiments and as illustrated in the shown embodiment, the radius *r₂b* of the second concave corner 440b of said next following lateral sides 414b of the lateral wall 410a may exceed the radius *r₂a* of the second concave corner 440a of a next lateral side 414a of the lateral wall 410a following said next following lateral side 414b of the lateral wall 410a in the direction 129 toward the interface 408, for example by at least 1 to 5 percent, for example by at least 5 to 10 percent, such as by at least 10 percent.

With reference to figures 10 and 11, for some embodiments, it may be defined that the tubular member 408 forms a closed space 430. One or more of the first and second concave corners 438a-b, 440a-b may open away from, or may be located outside, the closed space 430.

With reference to figures 10 and 11, for some embodiments, the two or more lateral sides 414a-c of the lateral wall 410a, 410b, i.e. the two or more lateral sides 414a-c of the same lateral wall 410a, 410b, may be aligned in the longitudinal direction 106. For some embodiments, it may be defined that the lateral side 414a-c is located outside the closed space 430. For some embodiments, it may be defined that the plurality of longitudinal walls 410a-d includes a top wall 410c and a bottom wall 410d, wherein the top wall 410c and the bottom wall 410d are opposite one another. For some embodiments, it may be defined that the two lateral walls 410a-b, the top wall 410c and the bottom wall 410d together form the tubular member 402.

With reference to figures 10 and 11, for some embodiments, the top wall 410c may include two or more top sides 432a-c spaced apart from one another in the longitudinal direction 106 and aligned in the longitudinal direction 106. For some embodiments, the bottom wall 410d may include two or more bottom sides 434a-c spaced apart from one another in the longitudinal direction 106 and aligned in the longitudinal direction 106. For some embodiments, it may be defined that the top side 432a-c is located outside the closed space 430 and that the bottom side 434a-c is located outside the closed space 430.

With reference to figures 10 and 11, for some embodiments, the transverse extension 422a-c of one 414a-b of the two or more lateral sides 414a-c of the lateral wall 410a located closer to the interface 408 (i.e. the one lateral side 414a-b closer to the interface 408) than another one 414b-c of the two or more lateral sides 414a-c of the lateral wall 410a located farther away from the interface 408 (i.e. the other one lateral side 414b-c farther away from the interface 408) may exceed the transverse extension 422b-c of the lateral side 414b-c of the lateral wall 410a located farther away from the interface 408 (i.e. the transverse extension 422b-c of the other one lateral side 414b-c farther away from the interface 408).

With reference to figures 10 and 11, for some embodiments, the interface 408 may include, or form, two recesses 436a-b for holding the bumper beam 200, wherein one 410a of the two lateral walls 410a-b forms one 436a of the two recesses 436a-b while the other one 410b of the two lateral walls 410a-b forms the other one 436b of the two recesses 436a-b. For some embodiments, the interface 408 may be configured for the attachment of the tubular member 402 to a U-shaped member 204 of the bumper beam 200, the U-shaped member 204 having a U-shaped cross-section and being configured to open away from the tubular member 402 in the longitudinal direction 106. For some embodiments, the interface 408 may be configured for the attachment of the tubular member 402 to the convex side 206 of the U-shaped member 204.

With reference to figures 10 and 11, for some embodiments, the longitudinal wall 410a-d of the plurality of longitudinal walls 410a-d may be formed from a plate. One or more of the tubular member 402 and vehicle crash box structure 400 may include or may consist of a metal or a metal alloy. However, other materials are also possible.

With reference to figures 10 and 11, although the features regarding the radii *r₁a-c, r₂a-c* of the first and second concave corners 438a-c, 440a-c are illustrated for one 410a of the two lateral walls 410a-b in figures 10 and 11, it is to be understood that corresponding features may apply to the other one 410b of the two lateral walls 410a-b in a corresponding manner.

With reference to figures 1 to 9, for some embodiments of the vehicle crash box 100a, 100b according to the first aspect of the invention, one or more features of the vehicle crash box structure 400 according to aspects of the invention disclosed above in connection with figures 10 and 11 may be applied to, or may be included in, embodiments of the vehicle crash box 100a, 100b according to the first aspect of the invention, for example the embodiments of the vehicle crash box 100a, 100b disclosed above in connection with figures 1 to 9.

With reference to figures 1 to 9, for some embodiments of the vehicle bumper structure 300 according to the second aspect of the invention, one or more of the vehicle crash boxes 100a, 100b illustrated in figures 1 to 9 may be replaced by one or more of the vehicle crash box structures 400 illustrated in figures 10 and 11.

The features of the different embodiments of the vehicle crash box 100a, 100b, the vehicle crash box structure 400 and the vehicle bumper structure 300 disclosed above may be combined in various possible ways providing further advantageous embodiments.

The invention shall not be considered limited to the embodiments illustrated above. Instead, the present invention relates to, and encompasses all different embodiments being included within the scope of the independent claims.

## Claims

1. A vehicle crash box (100a, 100b) for attaching a bumper beam (200) to a vehicle (230), wherein the vehicle crash box (100a, 100b) is attachable to the vehicle (230), wherein the vehicle crash box (100a) comprises
a tubular member (102) having a longitudinal extension (104) extending in a longitudinal direction (106), and
an interface (108) for the attachment of the tubular member (102) to the bumper beam (200),
wherein the tubular member (102) comprises a plurality of longitudinal walls (110a-d) having a longitudinal extension (112a-d) extending in the longitudinal direction (106),
wherein the plurality of longitudinal walls (110a-d) comprises two lateral walls (110a-b) opposite one another,
wherein the lateral wall (110a; 110b) comprises two or more lateral sides (114a-c; 116a-c) spaced apart from one another in the longitudinal direction (106),
wherein the lateral side (114a-c; 116a-c) has a longitudinal extension (118a-c; 120a-c) extending in the longitudinal direction (106),
wherein the lateral side (114a-c; 116a-c) has a transverse extension (122a-c; 124a-c) extending in a direction (126) transverse to the longitudinal direction (106),
wherein the two or more lateral sides (114a-c; 116a-c) of the lateral wall are aligned in the longitudinal direction (106),
**characterized in that**
the transverse extensions (122a-c; 124a-c) of the two or more lateral sides (114a-c; 116a-c) of the lateral wall (110a; 110b) decrease in a direction (128) away from the interface (108).

2. A vehicle crash box (100a) according to claim 1, wherein the tubular member (102) forms a closed space (130), and
wherein the lateral side (114a-c, 116a-c) is located outside the closed space (130).

3. A vehicle crash box (100a) according to claim 1 or 2, wherein the plurality of longitudinal walls (110a-d) comprises a top wall (110c) and a bottom wall (110d), and
wherein the top wall (110c) and the bottom wall (110d) are opposite one another.

4. A vehicle crash box (100a) according to claim 3, wherein the two lateral walls (110a-b), the top wall (110c) and the bottom wall (110d) together form the tubular member (102).

5. A vehicle crash box (100a) according to any one of the claims 1 to 4, wherein the transverse extension (122a-b; 124a-b) of one (114a-b; 116a-b) of the two or more lateral sides (114a-c; 116a-c) of the lateral wall (110a; 110b) located closer to the interface (108) than another one (114b-c; 116b-c) of the two or more lateral sides (114a-c; 116a-c) of the lateral wall (110a; 110b) located farther away from the interface (108) exceeds the transverse extension (122b-c; 124b-c) of the lateral side (114b-c; 116b-c) of the lateral wall (110a; 110b) located farther away from the interface (108).

6. A vehicle crash box (100a) according to any one of the claims 1 to 5, wherein the lateral wall 110a; 110b) comprises three or more lateral sides (114a-c; 116a-c) spaced apart from one another in the longitudinal direction (106).

7. A vehicle crash box (100a) according to any one of the claims 1 to 6, wherein the interface (108) is configured for the attachment of the tubular member (102) to a U-shaped member (204) of the bumper beam (200), the U-shaped member (204) having a U-shaped cross-section and being configured to open away from the tubular member (102) in the longitudinal direction (106).

8. A vehicle crash box (100a) according to any one of the claims 1 to 7, wherein the longitudinal wall (110a-d) of the plurality of longitudinal walls (110a-d) is formed from a plate.

9. A vehicle crash box (100a) according to any one of the claims 1 to 8, wherein one or more of the tubular member (102) and vehicle crash box (100a) comprises/comprise or consists/consist of a metal or a metal alloy.

10. A vehicle crash box (100a) according to any one of the claims 1 to 9, wherein the transverse extension (122a-c; 422a-c) of the lateral side (114a-c; 414a-c) extends from a first concave corner (438a-c) of the lateral side (114a-c; 414a-c) to a second concave corner (440a-c) of the lateral side (114a-c; 414a-c), and
wherein the radii (*r₁a-c*) of the first concave corners (438a-c) of the two or more lateral sides (114a-c; 414a-c) of the lateral wall (110a; 410a) are different from one another.

11. A vehicle crash box (100a) according to claim 10, wherein the radii (*r₂a-c*) of the second concave corners (440a-c) of the two or more lateral sides (114-ac; 414a-c) of the lateral wall (110a; 410a) are different from one another.

12. A vehicle crash box (100a) according to any claim 10 or 11, wherein the radii (*r₁a-c*) of the first concave corners (438a-c) of the two or more lateral sides (114a-c; 414a-c) of the lateral wall (110a; 410a) decrease in a direction (129) toward the interface (108; 408).

13. A vehicle crash box according to any one of the claims 10 to 12, wherein the radii (*r₂a-c*) of the second concave corners (440a-c) of the two or more lateral sides (114-ac; 414a-c) of the lateral wall (110a; 410a) decrease in a direction (129) toward the interface (108; 408).

14. A vehicle bumper structure (300) comprising a bumper beam (200) and one or more vehicle crash boxes (100a, 100b) according to any one of the claims 1 to 13.

## Patentansprüche

1. Fahrzeugcrashbox (100a, 100b) zum Befestigen eines Stoßfängerträgers (200) an einem Fahrzeug (230), wobei die Fahrzeugcrashbox (100a, 100b) an dem Fahrzeug (230) befestigbar ist, wobei die Fahrzeugcrashbox (100a) Folgendes umfasst
ein rohrförmiges Element (102) mit einer Längserstreckung (104), die sich in einer Längsrichtung (106) erstreckt, und
eine Verbindungsstelle (108) zur Befestigung des rohrförmigen Elements (102) an dem Stoßfängerträger (200),
wobei das rohrförmige Element (102) mehrere Längswände (110a-d) mit einer Längserstreckung (112a-d) umfasst, die sich in der Längsrichtung (106) erstreckt,
wobei die mehreren Längswände (110a-d) zwei einander gegenüberliegende laterale Wände (110a-b) umfassen,
wobei die laterale Wand (110a; 110b) zwei oder mehr laterale Seiten (114a-c; 116a-c) umfasst, die in der Längsrichtung (106) voneinander beabstandet sind,
wobei die laterale Seite (114a-c; 116a-c) eine Längserstreckung (118a-c; 120a-c) aufweist, die sich in der Längsrichtung (106) erstreckt,
wobei die laterale Seite (114a-c; 116a-c) eine Quererstreckung (122a-c; 124a-c) aufweist, die sich in einer Richtung (126) quer zur Längsrichtung (106) erstreckt,
wobei die zwei oder mehr lateralen Seiten (114a-c; 116a-c) der lateralen Wand in der Längsrichtung (106) ausgerichtet sind,
**dadurch gekennzeichnet, dass**
die Quererstreckungen (122a-c; 124a-c) der zwei oder mehr lateralen Seiten (114a-c; 116a-c) der lateralen Wand (110a; 110b) in einer Richtung (128) weg von der Verbindungsstelle (108) abnehmen.

2. Fahrzeugcrashbox (100a) nach Anspruch 1, wobei das rohrförmige Element (102) einen geschlossenen Raum (130) bildet, und
wobei sich die laterale Seite (114a-c, 116a-c) außerhalb des geschlossenen Raums (130) befindet.

3. Fahrzeugcrashbox (100a) nach Anspruch 1 oder 2, wobei die mehreren Längswände (110a-d) eine obere Wand (110c) und eine untere Wand (110d) umfassen, und
wobei die obere Wand (110c) und die untere Wand (110d) einander gegenüberliegen.

4. Fahrzeugcrashbox (100a) nach Anspruch 3, wobei die zwei lateralen Wände (110a-b), die obere Wand (110c) und die untere Wand (110d) zusammen das rohrförmige Element (102) bilden.

5. Fahrzeugcrashbox (100a) nach einem der Ansprüche 1 bis 4, wobei die Quererstreckung (122a-b; 124a-b) einer (114a-b; 116a-b) der zwei oder mehr lateralen Seiten (114a-c; 116a-c) der lateralen Wand (110a; 110b), die näher an der Verbindungsstelle (108) angeordnet ist als eine andere (114b-c; 116b-c) der zwei oder mehr lateralen Seiten (114a-c; 116a-c) der lateralen Wand (110a; 110b), die weiter von der Verbindungsstelle (108) entfernt ist, die Quererstreckung (122b-c; 124b-c) der lateralen Seite (114b-c; 116b-c) der lateralen Wand (110a; 110b), die weiter von der Verbindungsstelle (108) entfernt ist, übersteigt.

6. Fahrzeugcrashbox (100a) nach einem der Ansprüche 1 bis 5, wobei die laterale Wand 110a; 110b) drei oder mehr laterale Seiten (114a-c; 116a-c) umfasst, die in der Längsrichtung (106) voneinander beabstandet sind.

7. Fahrzeugcrashbox (100a) nach einem der Ansprüche 1 bis 6, wobei die Verbindungsstelle (108) zur Befestigung des rohrförmigen Elements (102) an einem U-förmigen Element (204) des Stoßfängerträgers (200) ausgelegt ist, wobei das U-förmige Element (204) einen U-förmigen Querschnitt aufweist und dazu ausgelegt ist, sich von dem rohrförmigen Element (102) weg in der Längsrichtung (106) zu öffnen.

8. Fahrzeugcrashbox (100a) nach einem der Ansprüche 1 bis 7, wobei die Längswand (110a-d) der mehreren Längswände (110a-d) aus einer Platte gebildet ist.

9. Fahrzeugcrashbox (100a) nach einem der Ansprüche 1 bis 8, wobei eines oder mehrere des rohrförmigen Elements (102) und der Fahrzeugcrashbox (100a) ein Metall oder eine Metalllegierung umfasst/umfassen oder daraus besteht/bestehen.

10. Fahrzeugcrashbox (100a) nach einem der Ansprüche 1 bis 9, wobei sich die Quererstreckung (122a-c; 422a-c) der lateralen Seite (114a-c; 414a-c) von einer ersten konkaven Ecke (438a-c) der lateralen Seite (114a-c; 414a-c) zu einer zweiten konkaven Ecke (440a-c) der lateralen Seite (114a-c; 414a-c) erstreckt, und
wobei die Radien (*r₁a-c*) der ersten konkaven Ecken (438a-c) der zwei oder mehr lateralen Seiten (114a-c; 414a-c) der lateralen Wand (110a; 410a) voneinander verschieden sind.

11. Fahrzeugcrashbox (100a) nach Anspruch 10, wobei die Radien (*r₂a-c*) der zweiten konkaven Ecken (440a-c) der zwei oder mehr lateralen Seiten (114-ac; 414a-c) der lateralen Wand (110a; 410a) voneinander verschieden sind.

12. Fahrzeugcrashbox (100a) nach einem der Ansprüche 10 oder 11, wobei die Radien (*r₁a-c*) der ersten konkaven Ecken (438a-c) der zwei oder mehr lateralen Seiten (114a-c; 414a-c) der lateralen Wand (110a; 410a) in einer Richtung (129) zur Verbindungsstelle (108; 408) hin abnehmen.

13. Fahrzeugcrashbox nach einem der Ansprüche 10 bis 12, wobei die Radien (*r₂a-c*) der zweiten konkaven Ecken (440a-c) der zwei oder mehr lateralen Seiten (114-ac; 414a-c) der lateralen Wand (110a; 410a) in einer Richtung (129) zur Verbindungsstelle (108; 408) hin abnehmen.

14. Fahrzeugstoßfängerstruktur (300), die einen Stoßfängerträger (200) und eine oder mehrere Fahrzeugcrashboxen (100a, 100b) nach einem der Ansprüche 1 bis 13 umfasst.

## Revendications

1. Boîte-tampon de véhicule (100a, 100b) destinée à fixer une poutre de pare-chocs (200) à un véhicule (230), dans laquelle la boîte-tampon de véhicule (100a, 100b) est fixable au véhicule (230), dans laquelle la boîte-tampon de véhicule (100a) comprend
un élément tubulaire (102) ayant une extension longitudinale (104) s'étendant dans une direction longitudinale (106), et
une interface (108) pour la fixation de l'élément tubulaire (102) à la poutre de pare-chocs (200),
dans laquelle l'élément tubulaire (102) comprend une pluralité de parois longitudinales (110a-d) ayant une extension longitudinale (112a-d) s'étendant dans la direction longitudinale (106),
dans laquelle la pluralité de parois longitudinales (110a-d) comprend deux parois latérales (110a-b) opposées l'une à l'autre,
dans laquelle la paroi latérale (110a ; 110b) comprend deux, ou plus, côtés latéraux (114a-c ; 116a-c) espacés les uns des autres dans la direction longitudinale (106), dans laquelle le côté latéral (114a-c ; 116a-c) a une extension longitudinale (118a-c ; 120a-c) s'étendant dans la direction longitudinale (106),
dans laquelle le côté latéral (114a-c ; 116a-c) a une extension transversale (122a-c ; 124a-c) s'étendant dans une direction (126) transversale à la direction longitudinale (106),
dans laquelle les deux, ou plus, côtés latéraux (114a-c ; 116a-c) de la paroi latérale sont alignés dans la direction longitudinale (106),
**caractérisée en ce que**
les extensions transversales (122a-c ; 124a-c) des deux, ou plus, côtés latéraux (114a-c ; 116a-c) de la paroi latérale (110a ; 110b) diminuent dans une direction (128) à l'opposé de l'interface (108).

2. Boîte-tampon de véhicule (100a) selon la revendication 1, dans laquelle l'élément tubulaire (102) forme un espace fermé (130), et
dans laquelle le côté latéral (114a-c, 116a-c) est situé à l'extérieur de l'espace fermé (130).

3. Boîte-tampon de véhicule (100a) selon la revendication 1 ou 2, dans laquelle la pluralité de parois longitudinales (110a-d) comprend une paroi supérieure (110c) et une paroi inférieure (110d), et
dans laquelle la paroi supérieure (110c) et la paroi inférieure (110d) sont opposées l'une à l'autre.

4. Boîte-tampon de véhicule (100a) selon la revendication 3, dans laquelle les deux parois latérales (110a-b), la paroi supérieure (110c) et la paroi inférieure (110d) forment conjointement l'élément tubulaire (102).

5. Boîte-tampon de véhicule (100a) selon l'une quelconque des revendications 1 à 4, dans laquelle l'extension transversale (122a-b ; 124a-b) d'un (114a-b ; 116a-b) des deux, ou plus, côtés latéraux (114a-c ; 116a-c) de la paroi latérale (110a ; 110b) situé plus près de l'interface (108) qu'un autre (114b-c ; 116b-c) des deux, ou plus, côtés latéraux (114a-c ; 116a-c) de la paroi latérale (110a ; 110b) situé plus loin de l'interface (108) dépasse l'extension transversale (122b-c ; 124b-c) du côté latéral (114b-c ;
116b-c) de la paroi latérale (110a ; 110b) situé plus loin de l'interface (108).

6. Boîte-tampon de véhicule (100a) selon l'une quelconque des revendications 1 à 5, dans laquelle la paroi latérale 110a ; 110b) comprend trois, ou plus, côtés latéraux (114a-c ; 116a-c) espacés les uns des autres dans la direction longitudinale (106).

7. Boîte-tampon de véhicule (100a) selon l'une quelconque des revendications 1 à 6, dans laquelle l'interface (108) est configurée pour la fixation de l'élément tubulaire (102) à un élément en forme de U (204) de la poutre de pare-chocs (200), l'élément en forme de U (204) ayant une section transversale en forme de U et étant configuré pour s'ouvrir à l'opposé de l'élément tubulaire (102) dans la direction longitudinale (106).

8. Boîte-tampon de véhicule (100a) selon l'une quelconque des revendications 1 à 7, dans laquelle la paroi longitudinal (110a-d) de la pluralité de parois longitudinales (110a-d) est formée d'une plaque.

9. Boîte-tampon de véhicule (100a) selon l'une quelconque des revendications 1 à 8, dans laquelle un ou plusieurs de l'élément tubulaire (102) et de la boîte-tampon de véhicule (100a) comprend/comprennent ou est constitué/sont constitués d'un métal ou d'un alliage de métal.

10. Boîte-tampon de véhicule (100a) selon l'une quelconque des revendications 1 à 9, dans laquelle l'extension transversale (122a-c ; 422a-c) du côté latéral (114a-c ; 414a-c) s'étend depuis un premier coin concave (438a-c) du côté latéral (114a-c ; 414a-c) jusqu'à un second coin concave (440a-c) du côté latéral (114a-c ; 414a-c), et
dans laquelle les rayons (*r₁a-c*) des premiers coins concaves (438a-c) des deux, ou plus, côtés latéraux (114a-c ; 414a-c) de la paroi latérale (110a ; 410a) sont différents les uns des autres.

11. Boîte-tampon de véhicule (100a) selon la revendication 10, dans laquelle les rayons (*r₂a-c*) des seconds coins concaves (440a-c) des deux, ou plus, côtés latéraux (114-ac ; 414a-c) de la paroi latérale (110a ; 410a) sont différents les uns des autres.

12. Boîte-tampon de véhicule (100a) selon une quelconque revendication 10 ou 11, dans laquelle les rayons *(r₁a-c)* des premiers coins concaves (438a-c) des deux, ou plus, côtés latéraux (114a-c ; 414a-c) de la paroi latérale (110a ; 410a) diminuent dans une direction (129) vers l'interface (108 ; 408).

13. Boîte-tampon de véhicule selon l'une quelconque des revendications 10 à 12, dans laquelle les rayons (*r₂a-c*) des seconds coins concaves (440a-c) des deux, ou plus, côtés latéraux (114-ac ; 414a-c) de la paroi latérale (110a ; 410a) diminuent dans une direction (129) vers l'interface (108 ; 408).

14. Structure de pare-chocs de véhicule (300), comprenant une poutre de pare-chocs (200) et une ou plusieurs boîtes-tampons de véhicule (100a, 100b) selon l'une quelconque des revendications 1 à 13.
